# EUROPEAN PATENT SPECIFICATION

(11) **EP 3 273 578 B1**
(45) Date of publication and mention of the grant of the patent: **03.06.2020**
(21) Application number: 16180506.4
(22) Date of filing: 21.07.2016
(51) Int. Cl.: H02K 7/18, H02K 9/04

(54) **COOLING ARRANGEMENT OF A WIND TURBINE GENERATOR**
KÜHLANORDNUNG EINES WINDTURBINENGENERATORS
AGENCEMENT DE REFROIDISSEMENT DE GÉNÉRATEUR DE TURBINE ÉOLIENNE

(43) Date of publication of application: 24.01.2018
(73) Proprietor: Siemens Aktiengesellschaft, 80333 München (DE)
(72) Inventor: Groendahl, Erik, 8653 Them (DK)

(56) References cited:
- EP-A1- 2 182 619
- EP-A1- 2 806 542
- EP-A1- 2 958 217
- EP-A1- 3 054 565
- EP-A2- 1 586 769

## Description

The invention describes a cooling arrangement of a wind turbine, a wind turbine comprising such a cooling arrangement, and a method of cooling the generator of a wind turbine.

During operation of a wind turbine, high temperatures can be reached in the generator windings on account of the large currents induced in the windings. For various reasons, it is important to keep the temperatures in the generator to within reasonable limits. One important aspect is that the hot windings are located very close to the generator magnets over the narrow air-gap between stator and rotor. However, the magnet performance can be negatively affected by excessive heat. If the magnets are exposed to too high temperatures, they may be partly demagnetized, and the power output of the generator may be reduced.

Therefore, much effort is invested in the development of efficient cooling systems for wind turbine generators. In the case of a direct-drive wind turbine, which generally comprises an outer rotor that rotates about an inner stator, efficient cooling is made difficult by the compact design at the drive end. The hub is connected to the cylindrical outer rotor at the drive end by means of a rotor frontplate extending between the hub and the outer rotor, so that the hub and outer rotor move as one. The inner stator is generally mounted about a shaft that leads into the nacelle for connection to the yaw system of the wind turbine. Only a relatively small space remains between the rotor frontplate and the generator, and it is not practicable to arrange components of a cooling system in this front-end cavity. In one approach to cooling such a generator, as described in EP 3 054 565A1, bypass channels may lead through a stator interior cavity from the non-drive-end to the drive-end in order to convey cool air from the non-drive-end into the front-end cavity. EP 2 182 619 A1 describes a combination of air cooling and liquid cooling. These solutions require significant design alterations to the stator assembly, and may therefore be considered too costly.

It is therefore an object of the invention to provide a more economical and simpler way of cooling a direct-drive wind turbine.

This object is achieved by the cooling arrangement of claim 1; by the direct-drive wind turbine of claim 11; and by the method of claim 13 of cooling a wind turbine generator.

In the context of the invention, a wind turbine generator is assumed to have an outer rotor arranged about a stator assembly, which comprises a stator mounted about a stationary shaft by means of a stator frontplate at the drive-end and a stator backplate at the non-drive-end of the generator.

According to the invention, a cooling arrangement of such a wind turbine generator comprises an intake path leading a cooling airflow into the annular generator air-gap solely from the non-drive end of the generator; a number of openings in the stator frontplate to lead a heated airflow from the air-gap into a stator interior cavity between the stator frontplate and stator backplate; and an extraction assembly arranged to draw the heated airflow out of the stator interior cavity through an opening in the stator backplate to the exterior of the wind turbine.

According to the invention, the method of cooling such a wind turbine generator comprises the steps of providing an intake path to lead a cooling airflow into the generator air-gap solely from the non-drive end of the generator; providing a number of openings in the stator frontplate to lead a heated airflow from the air-gap into a stator interior cavity between the stator frontplate and stator backplate; and drawing the heated airflow out of the stator interior cavity through an opening in the stator backplate to the exterior of the wind turbine.

In the context of the invention, it is to be understood that the cooling airflow is essentially unobstructed on its path to the air-gap, so that the cooling airflow has essentially retained its cooling capacity when it enters the air-gap at the non-drive end of the generator. An advantage of the inventive cooling arrangement and the inventive method is that an efficient cooling of the stator windings can be achieved at favourably low cost and with a favourably low effort. It is relatively straightforward to form openings in the stator frontplate, and it is also relatively straightforward to provide an extraction assembly to draw the heated airflow through an opening in the stator backplate. According to the invention, a direct-drive wind turbine with such a generator comprises the inventive cooling arrangement to cool the generator. Owing to the deliberate guidance of cool air into the air-gap to pass directly between the windings and the magnets, the cooling airflow can efficiently cool the windings and keep the magnet temperature within acceptable limits. Since the winding temperatures and magnet temperatures can be kept within favourably low limits, other components of the generator are also protected from overheating.

Particularly advantageous embodiments and features of the invention are given by the dependent claims, as revealed in the following description. Features of different claim categories may be combined as appropriate to give further embodiments not described herein.

As indicated above, the stator assembly comprises a cylindrical stator body which is mounted at a certain distance from the main shaft by a stator frontplate (at the drive end of the generator) and a stator backplate (at the non-drive-end of the generator). In the context of the invention, the term "stator frontplate" may be assumed to mean the structural connection between the main shaft and the stator body. The structural connection may be made by means of a flange extending radially outward from the main shaft and/or a flange extending radially inward from the stator body. The stator body may be assumed to comprise a plurality of longitudinal slots for holding the windings. The stator body may be a solid body, or may be constructed using a laminate stack. In a direct-drive wind turbine, the hub is mounted to a stationary shaft by means of a suitable bearing arrangement. The supporting structure such as a fixed shaft extends from the hub through the stator assembly. In one type of wind turbine design, the fixed shaft can be bent or curved between the generator and the top of the wind turbine tower, so that it can connect to a yaw drive. At the front end of the generator, between the stator frontplate and the outer rotor, an annular cavity extends around the shaft. This cavity may be referred to in the following as the front-end cavity or front-end space.

The rotor assembly of a direct-drive wind turbine generally comprises a cylindrical outer rotor with a plurality of magnets arranged about its interior so that the magnets face the windings across a narrow air-gap, which usually measures only a few millimetres. To be able to halt the rotor or to reduce its rotational velocity, the rotor assembly may be assumed to comprise an annular brake plate mounted to the non-drive end of the rotor assembly. The brake plate may be assumed to meet the rotor body at right angles, so that the brake plate is essentially vertical (disregarding any small angle of tilt of the generator to avoid blade/tower collisions).

Ambient air temperatures are generally significantly lower than the winding temperatures during operation of the generator, and the cooling airflow is preferably obtained from ambient air. To this end, in a preferred embodiment of the invention, the cooling arrangement comprises an air intake assembly arranged to draw cool air into a nacelle interior of the wind turbine. Airborne particles may be present in the ambient air. Therefore, the air intake assembly may include a filter arrangement to ensure that only clean air enters the generator. To avoid corrosion damage and to avoid condensation on the magnets and windings if these are cooler than the ambient air (e.g. during startup in cold weather), the air intake assembly may also include a drying arrangement to remove any moisture from the cooling airflow before it enters the generator.

In the cooling arrangement according to the invention, hot air exits the airgap at the drive end of the generator and enters the front-end cavity. A single relatively large opening in the stator frontplate might be enough to guide the heated airflow from the front-end cavity into the stator interior cavity. Since hot air tends to rise, such an opening might preferably be formed in the upper half of the stator frontplate. However, it may be preferred to remove the heated air from the front-end cavity in a more efficient manner. To this end, in a preferred embodiment of the invention the cooling arrangement comprises a plurality of openings in the stator frontplate. Preferably, the openings are distributed equidistantly about the stator frontplate.

An opening in the stator frontplate can be arranged close to the winding overhang, for example in the region of a flange extending radially inward (towards the main shaft) from the stator body. Equally, an opening in the stator frontplate can be arranged close to the main shaft, for example in the region of a flange extending radially outward (towards the stator body) from the main shaft. Any combination of such openings may be provided.

The airflow leaving the airgap at the front-end or drive-end of the generator will pass through gaps in the winding overhang if there is no other way to move around the winding overhang. This may be the case when the winding overhang fits closely into the stator front-end cavity. Otherwise, in a preferred embodiment of the invention, the cooling arrangement may comprise an airflow guide to deliberately guide at least part of the airflow through the winding overhang. Once the airflow has entered the front-end cavity, it may be preferable to assist the airflow to enter the stator cavity. To this end, in a further preferred embodiment of the invention, the cooling arrangement comprises one or more airflow guides to guide the heated airflow into a stator frontplate opening. In one example, such a guide may be realised as a kind of skirt of a suitable material arranged to direct the heated air from the front-end cavity into the stator interior.

As described above, the windings are arranged in slots extending along the length of the stator body. The hot windings will also heat the stator body during operation of the generator. Therefore, in order to also cool the stator body, the cooling arrangement in a preferred embodiment of the invention comprises a number of channels in the stator body arranged to lead a cooling airflow from the air-gap through the stator body directly into the stator interior. A channel preferably extends through the stator body in a radial direction from the air-gap into the stator interior. Any number or distribution of radial cooling channels may be used, for example three such radial cooling channels may be formed along a single winding slot, and may be equidistantly arranged along the length of the winding slot, or may be arranged at irregular intervals. One or more such channels may be formed in each winding slot, or only in alternate winding slots, etc., depending on the cooling requirements of the generator.

The heated air entering the stator interior through the openings in the stator frontplate (and through the radial channels) is preferably removed continually in order to maintain a high degree of cooling efficiency. The heated air should also be prevented from re-entering the generator. To this end, in a preferred embodiment of the invention the extraction assembly comprises an exit duct arranged to provide a closed channel for the heated airflow from the stator backplate opening to the exterior of the wind turbine. Any number of exit ducts may be arranged to offer the heated air a passage from the stator interior. As mentioned above, the stator interior may be an annular cavity surrounding the main shaft. Owing to convection, the hot air may then tend to rise to the upper level in the stator interior. Therefore, in a further preferred embodiment of the invention, an exit duct is arranged to leave the stator backplate from a level in the upper half of the stator assembly. For example, an exit opening may be provided towards the upper region of the stator backplate, so that the hot air accumulating near the "roof" of the stator interior can effectively be guided out of the stator interior. Of course, further exit ducts may be provided, with corresponding further exit openings in the stator backplate, so that the heated air can leave the stator interior over a number of exit paths.

An exit duct may extend from an exit opening in the stator backplate to an air outlet from the canopy. Such an exit duct can comprise a tube or hose with a suitably large diameter, and can be arranged as required in the canopy interior so that the heated air can pass unhindered to the outside. An air outlet from the canopy to the exterior is preferably arranged so that the expelled hot air does not immediately re-enter through the air intake.

As mentioned above, there is a winding overhang at each end of the stator. At the drive end, as described above, a compact design may compel the airflow to pass through the winding overhang so that this region is also cooled. At the non-drive end, as described above, a brake plate is connected to the rotor. In one realisation, the brake plate may extend from the outer edge of the rotor housing to cover the winding overhang region. In such a design, the cooling air intake is compelled by the brake plate to pass through the winding overhang before it can enter the airgap. In this way, the winding overhang at the non-drive end is also effectively cooled. In another realisation, the brake plate may be wider, i.e. may extend further inwards towards the main shaft. In this case, openings in the brake plate may be provided to allow the cooling airflow to enter the generator.

The inventive cooling arrangement may be entirely passive, i.e. any movement of the airflow from air intake to air outlet may arise from pressure differences, temperature differences, and the rotational movement of the rotor. It may be desirable to increase the flow rate of the cooling air, for example during operation at or above rated power output. To this end, in a preferred embodiment of the invention, the cooling arrangement comprises one or more intake fans arranged to draw the cooling airflow into the generator air-gap and/or one or more booster fans to draw the heated airflow from the air-gap into the stator interior and/or one or more extraction fans draw the heated airflow out of the stator interior and into the exit duct and/or an outlet fan arranged at an outlet opening in the canopy of the wind turbine to expel the heated air from the exit duct.

Other objects and features of the present invention will become apparent from the following detailed descriptions considered in conjunction with the accompanying drawings. It is to be understood, however, that the drawings are designed solely for the purposes of illustration and not as a definition of the limits of the invention.
- Fig. 1: shows a first embodiment of the cooling arrangement according to the invention;
- Fig. 2: shows a second embodiment of the cooling arrangement according to the invention;
- Fig. 3: shows a third embodiment of the cooling arrangement according to the invention;
- Fig. 4: shows a detail of a fourth embodiment of the cooling arrangement according to the invention;
- Fig. 5: shows a detail of a fifth embodiment of the cooling arrangement according to the invention.

In the diagrams, like numbers refer to like objects throughout. Objects in the diagrams are not necessarily drawn to scale.

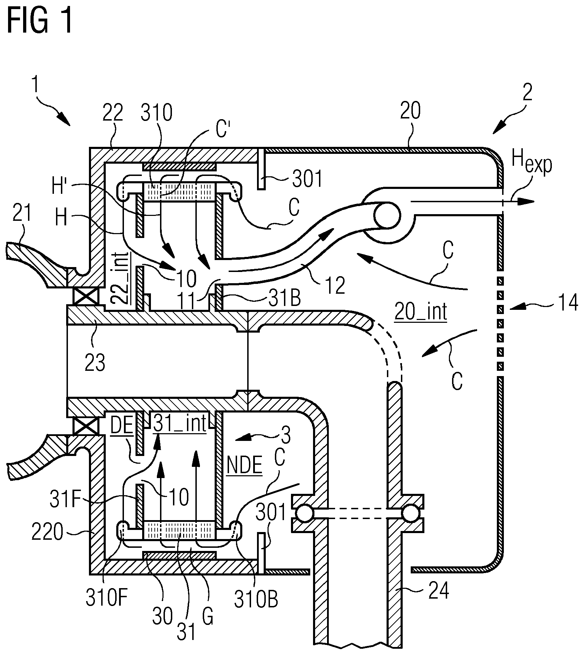

Fig. 1 shows an exemplary embodiment of the inventive cooling arrangement. The diagram shows only the relevant elements of a direct-drive wind turbine 2, and indicates a generator 3 with an outer rotor 22 turned by a hub 21 to which blades (not shown) are mounted. The outer rotor 22 is joined to the hub by a rotor frontplate 220. The hub 21 is mounted to a stationary shaft 23 by a bearing. The shaft 23 is connected to a further supporting element or "neck" that interfaces to a tower 24 by a yaw drive, as will be known to the skilled person. The rotor 22 rotates during operation of the wind turbine generator 2, and can be halted by a brake mechanism that engages with a brake plate 301. A stationary canopy 20 encloses various components of the wind turbine 2, and forms a canopy interior space 20_int. A suitable seal may be present between canopy and outer rotor to prevent moisture and particles from entering the interior space 20_int.

The inner stator assembly of the generator 3 comprises a stator body 31 mounted about the shaft 23 by a stator frontplate 31F and stator backplate 31B, defining a stator interior cavity 31_int. Windings 310 are arranged in winding slots of the stator 31 to face the rotor magnets 30 across a narrow airgap G. The windings 310 fold over at the drive end DE and the non-drive end NDE of the stator 31. A cooling airflow C enters from an intake arrangement 14, which in this case is arranged at the rear of the canopy 20. Because the brake plate 301 extends over the winding overhang 310B at the non-drive end NDE of the generator 3, the cooling airflow C is compelled to pass through the winding overhang 310B to enter the airgap G. The cool air C travels forward towards the drive end DE of the generator 3, absorbing heat as it passes over the hot windings 310. The heated air H exits the airgap G at the drive end DE, and enters the stator interior 31_int by openings 10 in the stator frontplate 31F. The hot air H leaves the stator interior 21_int through an opening in the stator backplate 31B, which feeds the hot air H to and exit duct 12. The exit duct 12 leads to the exterior of the wind turbine 2.

In this exemplary embodiment, the stator body is constructed from a laminate stack, and radial channels 313 extend through the stator body 31 to link the airgap G with the stator interior 31_int. A relatively cool airflow C' can pass from the airgap G through the stator body to also cool the material of the stator 31, and the resulting warmed air H' also enters the interior space 31_int and can leave through the exit duct 12. The exit duct 12 is arranged to expel hot air Hₑₓₚ from a suitable location, for example at the rear of the canopy 20.

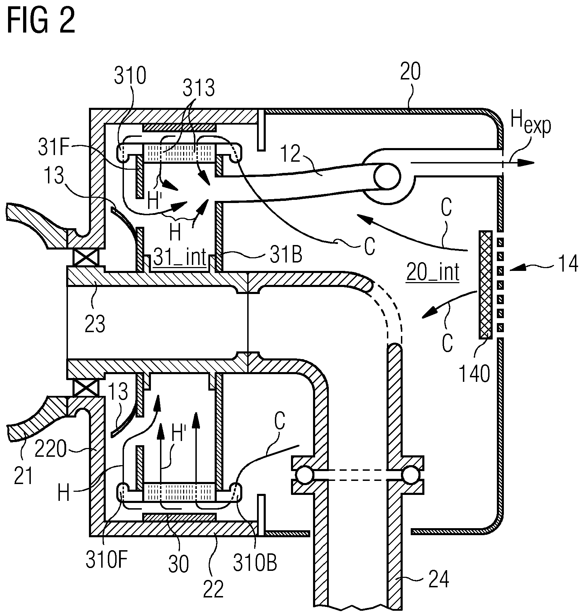

Fig. 2 shows a further embodiment. Here, the intake arrangement 14 comprises a filter unit 140 to remove any airborne contaminants or particles from the air intake C. The diagram also shows an airflow guide 13 arranged in a front-end cavity 22_int defined largely by the outer rotor 22 and stator frontplate 31F. The airflow guide 13 serves to guide the hot air H exiting the airgap G into the stator interior 31_int. The stator frontplate openings 10 shown here could equally be arranged further outward (closer to the winding overhang 310F), and the position of the airflow guides 13 could be adjusted accordingly.

In this embodiment, the stator backplate opening 11 is arranged further outward, i.e. higher up on the stator backplate 31B. This position can ensure that hot air H, H' is drawn away from the "roof" of the stator interior 31_int.

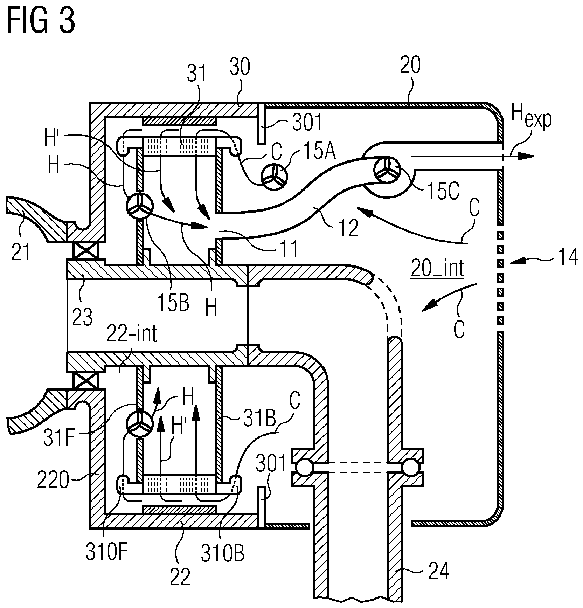

Fig. 3 shows how various fans may be incorporated into the cooling arrangement to accelerate the airflow. An intake fan 15A speeds up the cool air C on its way to the airgap G. A booster fan 15B near or in the stator frontplate opening 10 can draw the hot air H into the stator interior 31_int. An extractor fan 15C can suck or draw the hot air H, H' out of the stator interior 31_int and into the exit duct 12 to speed its path to the outside. One or more of these fans could be used to augment the cooling arrangement.

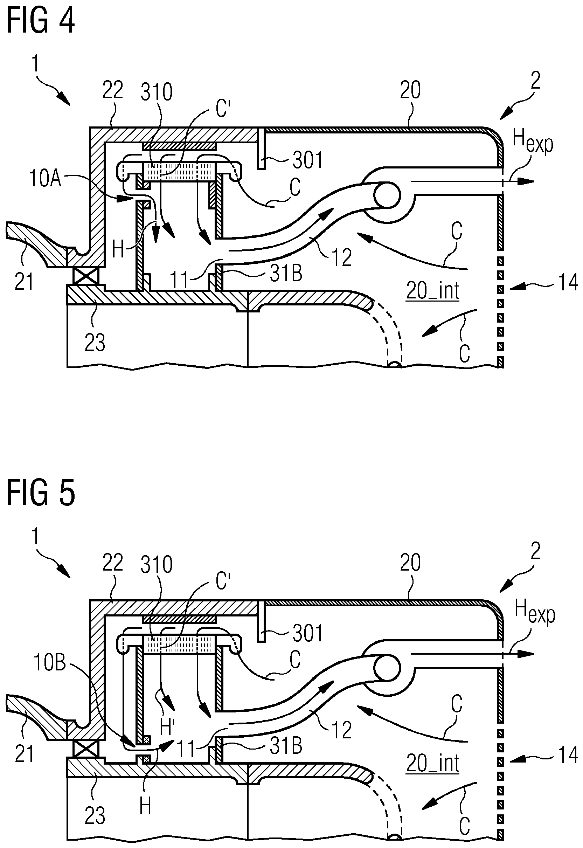

Fig. 4 shows a detail of a further embodiment, in which a number of openings 10A are provided close to the winding overhang 310F so that the heated air H can pass through openings in a flange extending radially inward (towards the main shaft 23) from the stator body 31.

Fig. 5 shows a detail of a further embodiment, in which a number of openings 10B are provided close to the main shaft 23 so that the heated air H can pass through openings in a flange extending radially outward (towards the stator body 31) from the main shaft 23.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A cooling arrangement (1) of a wind turbine generator (3) having an outer rotor (22) arranged about a stator (31) mounted to a shaft (23) by means of a stator frontplate (31F) and a stator backplate (31B), which cooling arrangement (1) is realised to guide a cooling airflow (C) into the generator air-gap (G) and comprises
- an intake path leading the cooling airflow (C) into the generator air-gap (G) solely from the non-drive end (NDE) of the generator (3);
- a number of openings (10, 10A, 10B) in the stator frontplate (31F) to lead a heated airflow (H) from the air-gap (G) into a stator interior cavity (31_int) between the stator frontplate (31F) and stator backplate (31B); and
- an extraction assembly (11, 12) arranged to draw the heated airflow (H) out of the stator interior cavity (31_int) to the exterior of the wind turbine (2).

2. A cooling arrangement according to claim 1, comprising a plurality of openings (10, 10A, 10B) in the stator frontplate (31F) .

3. A cooling arrangement according to claim 2, wherein the openings (10, 10A, 10B) are distributed equidistantly about the stator frontplate (31F).

4. A cooling arrangement according to any of the preceding claims, comprising a number of channels (313) in the body of the stator (31) arranged to lead a cooling airflow (C') from the air-gap (G) into the stator interior (31_int).

5. A cooling arrangement according to claim 4, wherein a channel (313) extends in a radial direction from the air-gap (G) through the stator (31) in the direction of the stator interior cavity (31_int).

6. A cooling arrangement according to any of the preceding claims, comprising an air intake assembly (14, 140) arranged to introduce cool air (C) into an interior space (20_int) of the wind turbine (2).

7. A cooling arrangement according to any of the preceding claims, wherein the extraction assembly (11, 12) comprises an exit duct (12) arranged to provide a closed channel (12) for the heated airflow (H, H') from the stator backplate opening (11) to the exterior of the wind turbine (2).

8. A cooling arrangement according to claim 7, wherein an exit duct (12) is arranged at the level of the upper half of the stator backplate (31B).

9. A cooling arrangement according to any of the preceding claims, comprising an airflow guide (13) at the stator frontplate (31F) to guide the airflow (H) into the stator frontplate openings (10, 10A, 10B).

10. A cooling arrangement according to any of the preceding claims, comprising
- an intake fan (15A) arranged to draw the cooling airflow (C) into the generator air-gap (G) and/or
- a booster fan (15B) to draw the heated airflow (H, H') from the air-gap (G) into a stator interior cavity (31_int) and/or
- an extraction fan (15C) draw the heated airflow (H, H') out of the stator interior cavity (31_int).

11. A direct-drive wind turbine (2) with a generator (3) comprising an outer rotor (22) arranged about a stator (31) mounted to a shaft (23) by means of a stator frontplate (31F) and a stator backplate (31B), and further comprising a cooling arrangement (1) according to any of claims 1 to 10 to cool the generator (3).

12. A direct-drive wind turbine according to claim 11, comprising a brake plate (301) arranged to extend beyond a non-drive end winding overhang (310B).

13. A method of cooling a wind turbine generator (3) having an outer rotor (22) arranged about a stator (31) that is mounted to a shaft (23) by means of a stator frontplate (31F) and a stator backplate (31B), by guiding a cooling airflow (C) into the generator air-gap (G), which method comprises the steps of
- providing a intake path to lead the cooling airflow (C) into the generator air-gap (G) solely from the non-drive end (NDE) of the generator (3);
- providing a number of openings (10, 10A, 10B) in the stator frontplate (31F) to lead a heated airflow (H) from the air-gap (G) into a stator interior cavity (31_int) between the stator frontplate (31F) and stator backplate (31B); and
- drawing the heated airflow (H, H') out of the stator interior cavity (31_int) through an opening (11) in the stator backplate (31B) to the exterior of the wind turbine (2).

14. A method according to claim 13, comprising the step of accelerating the airflow (C, C', H, H') over at least one section of the airflow path.

## Patentansprüche

1. Kühlanordnung (1) eines Generators für eine Windkraftanlage (3), der einen Außenläufer (22) aufweist, der um einen Stator (31) herum angeordnet ist, der an einer Welle (23) mittels einer Frontplatte des Stators (31F) und einer Rückplatte des Stators (31B) angebracht ist, wobei die Kühlanordnung (1) dazu ausgelegt ist, einen kühlenden Luftstrom (C) in den Luftspalt des Generators (G) zu führen, und Folgendes umfasst
- einen Ansaugweg, der den kühlenden Luftstrom (C) in den Luftspalt des Generators (G) allein von der Nichtantriebsseite (non-drive end - NDE) des Generators (3) aus leitet;
- eine Anzahl von Öffnungen (10, 10A, 10B) in der Frontplatte des Stators (31F), um einen erwärmten Luftstrom (H) von dem Luftspalt (G) in einen Innenhohlraum des Stators (31_int) zwischen der Frontplatte des Stators (31F) und der Rückplatte des Stators (31B) zu leiten; und
- eine Absaugbaugruppe (11, 12), die angeordnet ist, den erwärmten Luftstrom (H) aus dem Innenhohlraum des Stators (31_int) zum Äußeren der Windkraftanlage (2) zu saugen.

2. Kühlanordnung nach Anspruch 1, umfassend mehrere Öffnungen (10, 10A, 10B) in der Frontplatte des Stators (31F).

3. Kühlanordnung nach Anspruch 2, wobei die Öffnungen (10, 10A, 10B) äquidistant über die Frontplatte des Stators (31F) verteilt sind.

4. Kühlanordnung nach einem der vorhergehenden Ansprüche, umfassend eine Anzahl von Kanälen (313) im Körper des Stators (31), die angeordnet sind, einen kühlenden Luftstrom (C') von dem Luftspalt (G) in das Innere des Stators (31_int) zu leiten.

5. Kühlanordnung nach Anspruch 4, wobei sich ein Kanal (313) in Radialrichtung von dem Luftspalt (G) durch den Stator (31) in Richtung des Innenhohlraums des Stators (31_int) erstreckt.

6. Kühlanordnung nach einem der vorhergehenden Ansprüche, umfassend eine Luftansaugbaugruppe (14, 140), die angeordnet ist, kühle Luft (C) in einen Innenraum (20_int) der Windkraftanlage (2) einzuleiten.

7. Kühlanordnung nach einem der vorhergehenden Ansprüche, wobei die Extraktionsbaugruppe (11, 12) eine Auslassröhre (12) umfasst, die angeordnet ist, einen geschlossenen Kanal (12) für den erwärmten Luftstrom (H, H') von der Öffnung (11) in der Rückplatte des Stators zum Äußeren der Windkraftanlage (2) bereitzustellen.

8. Kühlanordnung nach Anspruch 7, wobei eine Auslassröhre (12) auf der Ebene der oberen Hälfte der Rückplatte des Stators (31B) angeordnet ist.

9. Kühlanordnung nach einem der vorhergehenden Ansprüche, umfassend eine Luftstromführung (13) an der Frontplatte des Stators (31F), um den Luftstrom (H) in die Öffnungen (10, 10A, 10B) in der Frontplatte des Stators zu führen.

10. Kühlanordnung nach einem der vorhergehenden Ansprüche, Folgendes umfassend:
- ein Ansauggebläse (15A), das angeordnet ist, den kühlenden Luftstrom (C) in den Luftspalt (G) des Generators zu saugen, und/oder
- ein Booster-Gebläse (15B), um den erwärmten Luftstrom (H, H') von dem Luftspalt (G) in einen Innenhohlraum des Stators (31_int) zu saugen, und/oder
- ein Absauggebläse (15C), um den erwärmten Luftstrom (H, H') aus dem Innenhohlraum des Stators (31_int) zu saugen.

11. Windkraftanlage mit Direktantrieb (2) mit einem Generator (3), umfassend einen Außenläufer (22), der um einen Stator (31) herum angeordnet ist, der an einer Welle (23) mittels einer Frontplatte des Stators (31F) und einer Rückplatte des Stators (31B) angebracht ist, und ferner umfassend eine Kühlanordnung (1) nach einem der Ansprüche 1 bis 10, um den Generator (3) zu kühlen.

12. Windkraftanlage mit Direktantrieb nach Anspruch 11, umfassend eine Bremsplatte (301), die angeordnet ist, sich über einen Wickelkopf (310B) an der Nichtantriebsseite zu erstrecken.

13. Verfahren zum Kühlen eines Windkraftanlagengenerators (3), der einen Außenläufer (22) aufweist, der um einen Stator (31) herum angeordnet ist, der an einer Welle (23) mittels einer Frontplatte des Stators (31F) und einer Rückplatte des Stators (31B) angebracht ist, durch Führen eines kühlenden Luftstroms (C) in den Luftspalt des Generators (G), wobei das Verfahren die folgenden Schritte umfasst:
- Bereitstellen eines Ansaugwegs, um den kühlenden Luftstrom (C) in den Luftspalt (G) des Generators allein von der Nichtantriebsseite (NDE) des Generators (3) zu leiten;
- Bereitstellen einer Anzahl von Öffnungen (10, 10A, 10B) in der Frontplatte des Stators (31F), um einen erwärmten Luftstrom (H) von dem Luftspalt (G) in einen Innenhohlraum des Stators (31_int) zwischen der Frontplatte des Stators (31F) und einer Rückplatte des Stators (31B) zu leiten; und
- Saugen des erwärmten Luftstroms (H, H') aus dem Innenhohlraum des Stators (31_int) durch eine Öffnung (11) in der Rückplatte des Stators (31B) zum Äußeren der Windkraftanlage (2).

14. Verfahren nach Anspruch 13, umfassend den Schritt des Beschleunigens des Luftstroms (C, C', H, H') über mindestens einen Abschnitt des Luftstromwegs.

## Revendications

1. Agencement (1) de refroidissement d'une génératrice (3) d'éolienne, ayant un rotor (22) extérieur disposé autour d'un stator (31) monté sur un arbre (23) au moyen d'une plaque (31F) avant de stator et d'une plaque (31B) arrière de stator, lequel agencement (1) de refroidissement est réalisé pour conduire un courant (C) d'air de refroidissement dans l'entrefer (G) de la génératrice et comprend
- un trajet d'admission conduisant le courant d'air (C) de refroidissement dans l'entrefer (G) de la génératrice, seulement à partir de l'extrémité (NDE) de non entraînement de la génératrice (3) ;
- un certain nombre d'ouvertures (10, 10A, 10B) dans la plaque (31F) avant du stator pour conduire un courant (H) d'air chauffé de l'entrefer (G) à une cavité (31_int) intérieure du stator entre la plaque (31F) avant du stator et la plaque (31B) arrière du stator ; et
- un ensemble (11, 12) d'extraction agencé pour faire sortir le courant (H) d'air chauffé de la cavité (31_int) intérieure du stator à l'extérieur de l'éolienne (2).

2. Agencement de refroidissement suivant la revendication 1, comprenant une pluralité d'ouvertures (10, 10A, 10B) dans la plaque (31F) avant du stator.

3. Agencement de refroidissement suivant la revendication 2, dans lequel les ouvertures (10, 10A, 10B) sont réparties de manière équidistante autour de la plaque (31F) avant du stator.

4. Agencement de refroidissement suivant l'une quelconque des revendications précédentes, comprenant un certain nombre de conduits (313) dans le corps du stator (31), agencés pour conduire un courant (C') d'air de refroidissement de l'entrefer (G) à l'intérieur (31_int) du stator.

5. Agencement de refroidissement suivant la revendication 4, dans lequel un conduit (313) s'étend dans une direction radiale à partir de l'entrefer (G) dans le stator (31) dans la direction de la cavité (31_int) intérieure du stator.

6. Agencement de refroidissement suivant l'une quelconque des revendications précédentes, comprenant un ensemble (14, 140) d'admission d'air, agencé pour introduire de l'air (C) de refroidissement dans un espace (20_int) intérieur de l'éolienne (2).

7. Agencement de refroidissement suivant l'une quelconque des revendications précédentes, dans lequel l'ensemble (11, 12) d'extraction comprend un tuyau (12) de sortie, agencé pour procurer un conduit (12) fermé pour le courant (H, H') d'air chauffé, allant de l'ouverture (11) de la plaque arrière du stator à l'extérieur de l'éolienne (2).

8. Agencement de refroidissement suivant la revendication 7, dans lequel un tuyau (12) de sortie est disposé au niveau de la moitié supérieure de la plaque (31B) arrière du stator.

9. Agencement de refroidissement suivant l'une quelconque des revendications précédentes, comprenant une conduite (13) de courant d'air à la plaque (31F) avant du stator pour conduire le courant (H) d'air aux ouvertures (10, 10A, 10B) de la plaque avant du stator.

10. Agencement de refroidissement suivant l'une quelconque des revendications précédentes, comprenant
- un ventilateur (15A) d'admission, agencé pour faire aller le conduit (C) d'air de refroidissement dans l'entrefer (G) de la génératrice et/ou
- un ventilateur (15B) de renfort pour faire aller le courant (H, H') d'air chauffé de l'entrefer (G) à une cavité (31_int) intérieure du stator et/ou
- un ventilateur (15C) d'extraction pour faire sortir le courant (H, H') d'air chauffé de la cavité (31_int) intérieure du stator.

11. Eolienne (2) à entraînement direct, ayant une génératrice (3) comprenant un rotor (22) extérieur disposé autour d'un stator (31) monté sur un arbre (23) au moyen d'une plaque (31F) avant de stator et d'une plaque (31B) arrière de stator et comprenant, en outre, un agencement (1) de refroidissement suivant l'une quelconque des revendications 1 à 10 pour refroidir la génératrice.

12. Eolienne à entraînement direct suivant la revendication 11, comprenant une plaque (301) de frein, agencée pour s'étendre au-delà d'un porte à faux (310B) d'enroulement d'extrémité de non attaque.

13. Procédé de refroidissement d'une génératrice (3) d'éolienne ayant un rotor (22) extérieur disposé autour d'un stator (31), qui est monté sur un arbre (23) au moyen d'une plaque (31F) avant de stator et d'une plaque (31B) arrière de stator, en conduisant un courant (C) d'air de refroidissement dans l'entrefer (G) de la génératrice, le procédé comprenant les stades dans lesquels
- on prévoit un trajet d'admission pour conduire le courant (C) d'air de refroidissement dans l'entrefer (G) de la génératrice, seulement à partir de l'extrémité (NDE) de non entraînement de la génératrice (3) ;
- on prévoit un certain nombre d'ouvertures (10, 10A, 10B) dans la plaque (31F) avant du stator pour envoyer un courant (H) d'air chauffé de l'entrefer (G) à une cavité (31_int) intérieure du stator entre la plaque (31F) avant du stator et la plaque (31B) arrière du stator ; et
- on fait sortir le courant (H, H') d'air chauffé de la cavité (31_int) intérieure du stator à l'extérieur de l'éolienne (2) par une ouverture (11) de la plaque (31B) arrière du stator.

14. Procédé suivant la revendication 13, comprenant le stade d'accélération du courant (C, C', H, H') d'air sur au moins une partie du trajet du courant d'air.
